# FASCICULE DE BREVET EUROPEEN

(11) **EP 3 172 789 B1**
(45) Date de publication et mention de la délivrance du brevet: **26.06.2019**
(21) Numéro de dépôt: 15766598.5
(22) Date de dépôt: 21.07.2015
(51) Int. Cl.: H01M 10/0525, H01M 10/0568, H01M 10/0569, H01M 10/54

(54) **PROCEDE DE RECYCLAGE DE L'ELECTROLYTE D'UNE BATTERIE DE TYPE LI-ION ET PROCEDE DE RECYCLAGE DE BATTERIES DE TYPE LI-ION**
VERFAHREN ZUR WIEDERVERWENDUNG DES ELEKTROLYTS EINER LI-IONEN-BATTERIE UND VERFAHREN ZUR WIEDERVERWERTUNG VON LI-IONEN-BATTERIEN
METHOD FOR RECYCLING THE ELECTROLYTE OF A LI-ION BATTERY AND METHOD FOR RECYCLING LI-ION BATTERIES

(30) Priorité: 22.07.2014 FR 1457082
(43) Date de publication de la demande: 31.05.2017
(73) Titulaire: Commissariat à l'Énergie Atomique et aux Énergies Alternatives, 75015 Paris (FR)
(72) Inventeur: BILLY, Emmanuel, F-38100 Grenoble (FR); LAUCOURNET, Richard, F-38500 La Buisse (FR)
(74) Mandataire: Gevers & Orès
(86) Numéro de dépôt international: PCT/IB2015/055518
(87) Numéro de publication internationale: WO 2016/012943

(56) Documents cités:
- EP-A1- 0 613 198
- KR-A- 20140 082 077
- US-A- 5 352 270

## Description

L'invention concerne un procédé de recyclage de l'électrolyte d'une batterie de type lithium-ion. Elle concerne également un procédé de recyclage de batteries de type lithium-ion.

Les batteries de type lithium-ion (Li-ion) ont plusieurs applications, notamment, dans le domaine des véhicules électriques et hybrides, dans les appareils nomades, tels que les téléphones mobiles, les ordinateurs portables, les appareils photo, les caméscopes les systèmes de localisation GPS, etc.

Ces nombreuses applications requièrent l'utilisation d'une grande quantité de batteries. Il se pose donc la question du recyclage des batteries usagées. Depuis les dernières décennies les industriels prennent de plus en plus en considération les aspects écologiques de la fabrication et de la destruction des produits. En particulier, l'intérêt se porte sur la récupération et le recyclage de ces produits pour, à la fois, respecter l'équilibre écologique et réduire les coûts.

Ces principes de récupération et de recyclage sont déjà très largement appliqués au domaine des batteries étant donné leur large utilisation.

En particulier, le développement rapide de véhicules électriques implique de garantir des procédés de récupération et de recyclage de batteries qui répondent au cadre réglementaire et aux enjeux économiques et environnementaux. Généralement, les traitements s'intéressent de façon quasi-exclusive aux matériaux à plus fortes valeurs ajoutées, par exemple, les matériaux d'insertion d'électrode positive à base de cobalt et/ou nickel.

En raison des contraintes réglementaires de plus en plus drastiques, la récupération de l'électrolyte représente une véritable source de valorisation sur le plan économique et environnemental.

Actuellement, il existe plusieurs types de procédés de recyclage de batteries de type Li-ion, les principaux étant : le recyclage par traitement thermique, le recyclage en milieu liquide ionique, le recyclage hydro métallurgique et le recyclage par traitement organique.

Les Brevets TW501294, JP10046266, JP10158751 et JP10074539 divulguent des procédés de recyclage de batteries par traitement thermique.

Le brevet TW501294 décrit un procédé de récupération des déchets de batteries de type Li-ion qui s'effectue dans un four qui entraîne la décomposition de l'électrolyte organique. Ce procédé comprend plusieurs étapes de séparation physique et chimique qui conduisent à la récupération du lithium sous forme de carbonate.

Les brevets JP10046266, JP10158751 et JP10074539A divulguent des procédés dans lesquels les composés organiques sont brûlés pour récupérer uniquement le nickel, le cobalt et le lithium.

Tous ces procédés thermiques ne permettent pas la récupération des composés organiques. Par ailleurs ils sont énergivores et particulièrement générateurs de gaz et des particules fines toxiques pour l'homme et l'environnement
La demande de brevet EP2410603 A1 divulgue un procédé de recyclage de batteries de type Li-ion en milieu liquide ionique. Ce procédé est un procédé de récupération de l'électrolyte organique et du sel hexafluorophosphate de lithium (LiPF6) dans les batteries lithium-ion. Dans le procédé, l'électrolyte de la batterie est mis en contact avec un chlorure de phosphonium qui entraîne la formation d'une phase solide par précipitation du lithium sous forme de chlorure de lithium et la formation d'une phase liquide comprenant les carbonates et le liquide ionique (hexafluorophosphate de phosphonium). Après une séparation solide/ liquide, de l'eau est ajoutée dans la solution de carbonate et de liquide ionique entraînant la formation de deux phases immiscibles. Une première phase contient majoritairement de l'eau et les carbonates. La seconde phase est composée de l'hexafluorophosphate de phosphonium. Ensuite, chaque phase est indépendamment purifiée par distillation sous vide pour extraire l'eau des carbonates et du liquide ionique.

Ce procédé ne décrit pas la phase d'extraction de l'électrolyte de la batterie, indispensable pour récupérer les solvants organiques et le sel de lithium LiPF₆. Dans le cas où l'extraction de l'électrolyte serait réalisée avec le chlorure de phosphonium, celui-ci ne permet pas de séparer le sel de lithium des éléments de batterie. En effet, ceci entraînerait la précipitation de chlorure de lithium. De plus, la présence du liquide ionique engendrera la génération d'impuretés à la fois dans la phase liquide et dans les composants de batterie de la phase solide, qui devront alors être purifiées.

Les demandes de brevet US 2012/03121126 A1 et WO2005101564 A1 divulguent des procédés de recyclage hydro-métallurgiques.

Le document US 2012/0312126 A1 décrit un procédé de récupération des métaux des batteries lithium ion. Après désassemblage et triage des éléments de batterie, les éléments subissent une attaque acide qui extrait le lithium et les métaux de transition. La solution acide est ensuite traitée par dialyse avec une membrane perméable aux anions afin de séparer le cobalt du lithium. Enfin, le lithium est précipité en carbonate de lithium et le cobalt en hydroxyde de cobalt.

Ce procédé ne permet pas de traiter l'électrolyte de la batterie et s'intéresse exclusivement aux éléments à plus forte valeur ajoutée (Co, Ni, Cu, Al).

Le document WO2005101564 A1, quant à lui, décrit un procédé de récupération de batteries à base de lithium qui sont broyées à sec sous atmosphère inerte. Suite à cela, les broyats sont triés et traités par un procédé hydrométallurgique. Le cobalt et les copeaux contenant du lithium sont lavés avec de l'eau, relargant ainsi le lithium précipité. Les copeaux sont traités par une attaque acide afin de récupérer le cobalt. Les anions hexafluorophosphates sont récupérés sous la forme de complexe avec [Ni(NH3)₆]²⁺ ou avec le dihydro-1,4-diphényl-3,5-phénylimino-1,2,4-triazole.

Ce procédé ne permet pas de récupérer de façon simultanée le lithium, l'hexafluorophosphate et les carbonates organiques provenant de l'électrolyte.

Les documents US006329096 et CA23131173 A1 divulguent des procédés de recyclage des batteries de type Li-ion par traitement organique et aqueux.

Le brevet US6329096 décrit un procédé et d'un appareil pour la récupération de batteries primaires et secondaires comprenant au moins une cathode, une anode et un électrolyte scellés dans une pile accumulatrice. La première étape du procédé consiste à enlever la pile accumulatrice de la batterie tout en assurant sa mise en sécurité. Pour cela, la conductivité ionique entre la cathode et l'anode est abaissée par le refroidissement de la pile à des températures inférieures au point de solidification de l'électrolyte ou de transition vitreuse, généralement comprises entre 0 et -20°C. La batterie est ensuite découpée puis ouverte afin de retirer ces composants et extraire la solution de la partie solide. L'extraction de l'électrolyte est assurée par une dépression entre l'intérieur et l'extérieur de la pile accumulatrice.

Enfin, les composants sont individuellement triés pour être récupérés. Pour récupérer l'électrolyte de la batterie, un nettoyage avec un solvant organique est préconisé. Cette étape précède une distillation fractionnée pour séparer l'eau, provenant de la découpe à haute pression, de l'électrolyte de la batterie. Le solvant organique préconisé ne doit pas former d'azéotrope avec l'eau. Les exemples de solvant sont le méthanol, l'acétone, le 1,2-propanediol, le diméthyl sulfoxyde, le gamma-butyrolactone, le carbonate d'éthylène et le carbonate de propylène.

Ce procédé ne s'intéresse pas à la récupération du sel de lithium de l'électrolyte mais uniquement à la séparation des solvants organiques et de l'eau par distillation fractionnée. En présence d'un sel de type LiPF₆, la distillation fractionnée entraînera inévitablement la dégradation des anions PF₆⁻ en gaz toxique de type PF₅ et HF. Par ailleurs, leur présence entraînera des réactions de dégradation des solvants présents durant la distillation. Ainsi, le sel de lithium et les solvants organiques seront dégradés.

La demande de brevet CA2313173 A1 décrit un procédé de récupération des batteries lithium ions dans lequel les batteries sont préalablement découpées sous atmosphère inerte. Ensuite, elles sont traitées par un premier solvant organique (acétonitrile) afin d'extraire l'électrolyte (en absence d'eau). Le mélange est ensuite évaporé pour récupérer séparément l'électrolyte de la batterie et l'acétonitrile qui peut être réutilisé.

Le document brevet EP 0613198 A1 décrit un procédé de récupération des matériaux issus des batteries de type Li-ion à électrolyte non-aqueux. La méthode vise à traiter à la fois les matériaux et l'électrolyte organique. La batterie est découpée afin d'éviter l'ignition de celle-ci. La solution électrolytique est extraite soit avec i) un solvant organique soit avec ii) une solution aqueuse. Dans le cas d'une extraction avec un solvant organique, la mise en sécurité est réalisée sous atmosphère inerte. Après l'extraction il y a filtration solide/liquide. Le liquide est traité par une succession de distillation et purification. Dans le cas d'une extraction avec de l'eau, la mise en sécurité est réalisée avec un découpage sous jet d'eau haute pression. Puis, une séparation solide/liquide est mise en oeuvre. Les composants solides de la batterie sont immergés dans un solvant organique (alcool méthylique) qui ne forme pas d'azéotrope avec l'eau. Ensuite, les solutions sont mélangées, entraînant la précipitation du lithium sous la forme d'un hydroxyde de lithium. Après une séparation solide/liquide, la solution est distillée sous pression réduite et une succession de distillations fractionnées est réalisée afin de purifier la solution et séparer les solvants.

Les deux procédés décrits ci-dessus impliquent une étape de récupération de l'électrolyte qui nécessite une distillation fractionnée pour la séparation de l'électrolyte (solvants organiques et sel de lithium) et du solvant d'extraction. Aucun des schémas de traitement ne s'intéresse à la dégradation de l'anion du sel de lithium, en particulier PF₆⁻. Or, la présence de cet anion lors de la distillation va inévitablement engendrer la destruction de l'anion. En particulier, la dégradation des anions PF₆⁻ génère des substances toxiques telles que le fluorure d'hydrogène (HF), le pentafluorophosphate (PF₅), le phosphoryle fluoride (POF₃), qui sont extrêmement nocives et dangereuses pour l'homme et l'environnement. Par ailleurs, la présence d'HF et PF₅ entraîne la dégradation des solvants présents durant la distillation. Ainsi, le sel de lithium et les solvants organiques seront fortement dégradés. Par conséquent, ces procédés ne répondent pas au recyclage des électrolytes de batteries contenant, en particulier le sel hexafluorophosphate de lithium LiPF₆, qui est le sel le plus utilisé dans les batteries Li-ion.

US 5 352 270 A décrit un procédé de recyclage d'un électrolyte contenant un sel du lithium d'une batterie au lithium. Le procédé comprend les étapes suivantes: 1) traitement de la batterie pour récupérer l'électrolyte qu'elle contient; 2) ajout d'eau dans l'électrolyte; 3) filtration ou décantation pour séparer la phase liquide contenant l'électrolyte de la phase solide comprenant les résidus de la batterie; 4) distillation pour séparer les différents composants de la phase liquide, ce par quoi on obtient une solution aqueuse distillée, des composés de lithium solides tels que de sels de lithium, et des liquides organiques qui sont distillables à part de la solution aqueuse.

Ainsi, aucun des procédés connus actuellement ne permet de traiter l'anion du sel de lithium, en particulier hexafluorophosphate. Cet anion est d'une importance cruciale car il se dégrade en des espèces toxiques qui, elles-mêmes, génèrent la dégradation de l'électrolyte de la batterie.

Par conséquent, aucun des procédés de recyclage de l'électrolyte de batteries de type Li-ion, ou des procédés de recyclage de batteries de type Li-ion, connus actuellement, ne permet un recyclage permettant à la fois d'isoler les sels de lithium et d'isoler séparément, chacun des solvants d'électrolyte afin de les réutiliser dans un cycle fermé et de traiter l'anion des sels du lithium, et en particulier, de l'anion hexafluorophosphate.

Le problème technique que la présente invention se propose de résoudre est donc la fourniture d'un procédé de recyclage de l'électrolyte d'une batterie de type Li-ion, ainsi que d'un procédé de recyclage de batteries de type Li-ion, permettant à la fois d'isoler les sels de lithium de l'électrolyte et des électrodes, d'isoler séparément les solvants de l'électrolyte en évitant la dégradation des différents composés mais également de valoriser les anions des sels de lithium sous la forme d'un produit utilisable pour synthétiser de nouveau le sel de lithium.

Le but de la présente invention est donc de fournir un procédé de recyclage de l'électrolyte d'une batterie de type Li-ion et d'un procédé de recyclage des batteries de type Li-ion qui résolvent les problèmes précités rencontrés dans l'art antérieur.

Ainsi, un premier objet de la présente invention est un procédé de recyclage d'un électrolyte contenant un sel du lithium de formule LiA, où A représente un anion choisi parmi PF₆⁻, CF₃SO₃⁻, BF₄⁻, ClO₄⁻ et [(CF₃SO₂)_{2]}N⁻ d'une batterie de type Li-ion, caractérisé en ce qu'il comprend les étapes suivantes :
a) optionnellement, traitement de la batterie pour récupérer l'électrolyte qu'elle contient;
b) ajout d'eau dans l'électrolyte;
c) optionnellement, lorsque l'étape a) est mise en oeuvre, filtration (F1) pour séparer la phase liquide contenant l'électrolyte de la phase solide comprenant les résidus de la batterie;
d) ajout d'un solvant organique d'addition à la phase liquide obtenue à l'étape b) ou, lorsque l'étape a) est mise en oeuvre, après la filtration (F1) de l'étape c) ;
e) décantation de la phase liquide obtenue après l'étape b) d'ajout d'eau ou de l'étape d) d'ajout de solvant organique d'addition, ce par quoi une phase aqueuse contenant le sel de lithium et une phase organique contenant les solvants d'électrolyte et le solvant organique d'addition sont obtenues ;
f) distillation de la phase organique obtenue à l'étape e) pour séparer les solvants de l'électrolyte et le solvant organique d'addition ;
g) précipitation de l'anion A du sel de lithium par ajout de pyridine puis filtration (F2) ;
h) ajout d'au moins un sel de carbonate et/ou d'au moins un sel de phosphate au filtrat obtenu à l'étape g) puis filtration (F3) ce par quoi un sel de lithium et de l'eau sont obtenus.

Dans une première variante, ce procédé comprend l'étape a) et cette étape a) et l'étape b) sont réalisées en même temps, par découpe de la batterie sous jet d'eau à haute pression.

Selon une seconde variante, ce procédé comprend l'étape a) qui est réalisée par broyage de la batterie dans une enceinte sous atmosphère inerte.

Selon une troisième variante, ce procédé comprend l'étape a) qui est une étape de broyage de la batterie sous atmosphère inerte, l'étape d) d'ajout de solvant organique d'addition est mise en oeuvre soit pendant l'étape a), soit juste après l'étape a), l'étape c) de filtration (F1) est mise en oeuvre après l'étape d), et l'étape b) d'ajout d'eau est mise en oeuvre après l'étape c) de filtration (F1).

Dans toutes les variantes de ce procédé, de préférence, le solvant organique d'addition est un solvant organique aprotique et faiblement polaire ayant une solubilité inférieure à 20 gL⁻¹ dans l'eau, une solubilité de 100% dans les solvants organiques de l'électrolyte sans former d'azéotropes et un point d'ébullition compris entre 20 et 150°C.

Egalement, dans toutes les variantes de ce procédé, le solvant organique d'addition est, de préférence choisi parmi :
- le dichlorométhane,
- les acétates, choisis parmi le butyl acétate, l'hexyl acétate, l'éthyle acétate, le tert-butyl acétate;
- les éthers choisis parmi le 2-méthoxy-2-méthylpropane, le 2-éthoxy-2-méthylpropane, le 2-méthoxy-2-méthylbutane, et
- les cétones, de préférence, la butanone.

Toujours dans toutes les variantes de ce procédé, de préférence, le solvant organique d'addition obtenu après la distillation de la phase organique à l'étape f) est recyclé à l'étape d).

De la même façon, de préférence, l'étape e) de décantation est répétée.

Mais encore de préférence, l'eau obtenue à l'étape h) est récupérée pour être réutilisée à l'étape b).

L'invention propose aussi un procédé de recyclage d'une batterie de type Li-ion, comprenant une étape de recyclage de l'électrolyte de la batterie de type Li-ion selon l'invention.

Ce procédé comprend de plus, de préférence l'étape a) de traitement de la batterie et l'étape c) de filtration (F1), et une étape a1) de lavage à l'eau des solides obtenus après la filtration (F1), suivie d'une étape a2) de filtration (F4) pour séparer la phase liquide de la phase solide et une étape a3) de mélange de la phase liquide obtenue à l'étape a2) avant l'étape e) de décantation du procédé de recyclage de l'électrolyte.

Selon une caractéristique préférée des procédés de la présente invention, le solvant de l'électrolyte comprend un mélange binaire ou ternaire de carbonates cycliques choisis parmi le carbonate d'éthylène, le carbonate de propylène et le carbonate de butylène, de carbonates linéaires ou ramifiés choisis parmi le carbonate de diméthyle, le carbonate de diéthyle, le carbonate d'éthylméthyle et le diméthoxyéthane, dans lequel est dissous un sel de lithium choisi parmi l'hexafluorophosphate de lithium, le trifluoromethanesulfonate de lithium, le perchlorate de lithium et le tetratluoroborate de lithium.

L'invention sera mieux comprise et d'autres avantages et caractéristiques de celle-ci apparaîtront plus clairement à la lecture de la description détaillée qui suit et qui est faite en référence aux figures annexées dans lesquelles:
- la figure 1 est un organigramme illustrant un mode de mise en oeuvre du procédé de recyclage d'un électrolyte selon l'invention, cet électrolyte comprenant de l'hexafluorophosphate de lithium et provenant d'une batterie de type Li-ion. Dans ce mode de mise en oeuvre, l'étape a) de traitement de la batterie pour récupérer l'électrolyte ainsi que l'étape c) de filtration (F1) ne sont pas mises en oeuvre ;
- la figure 2 est un organigramme illustrant un mode de mise en oeuvre du procédé de recyclage d'un électrolyte selon l'invention, ce procédé ne comprenant pas les étapes a) et c) ;
- la figure 3 est un organigramme illustrant un mode de mise en oeuvre du procédé de recyclage d'un électrolyte selon l'invention, comprenant les étapes a) et c) ;
- la figure 4 est un organigramme illustrant un autre mode de mise en oeuvre du procédé de recyclage de l'invention, cet électrolyte provenant d'une batterie de type Li-ion, et ce procédé comprenant les étapes a) et c) ;
- la figure 5 montre le spectre infrarouge de la phase aqueuse et de la phase organique obtenue à l'étape e) du procédé de l'invention diluées dans une matrice d'acétonitrile, et obtenus à l'exemple 1 ;
- la figure 6 montre le spectre infrarouge d'un mélange de carbonate d'éthylène et de carbonate de diméthyle et des distillats obtenus après la distillation de l'exemple 1 ;
- la figure 7 montre, de haut en bas, les spectres FITR/ATR de la phase obtenue à l'exemple 2 avant l'étape e), de la phase aqueuse obtenue à l'exemple 2 après l'étape e) et de la phase organique obtenue à l'exemple 2 après l'étape e) ;
- la figure 8 montre, de haut en bas, le spectre infrarouge de la phase obtenue à l'étape e) du procédé de recyclage de l'électrolyte selon l'invention, avant la distillation de l'étape f), le spectre infrarouge de la phase organique obtenue après l'étape f) et le spectre infrarouge de la phase contenant les solvants après la distillation de l'étape f).

Le procédé de recyclage de l'électrolyte d'une batterie Li-ion de l'invention s'applique aux électrolytes comprenant :
- un sel de lithium de formule A-Li, dans laquelle A est un anion choisi parmi un anion hexafluorophosphate (PF₆⁻), trifluorométhanesulfonate (CF₃SO₃⁻), perchlorate (ClO₄⁻), tétrafluoroborate (BF₄⁻) et bis(trifluorométhane)sulfonimide [(CF₃SO₂)_{2]}N⁻,
- un solvant qui est un mélange binaire ou ternaire de carbonates cycliques choisis parmi le carbonate d'éthylène, le carbonate de propylène et le carbonate de butylène ; de carbonates linéaires ou ramifiés choisis parmi le carbonate de diméthyle, le carbonate de diéthyle, le carbonate d'éthylméthyle ; et le diméthoxyéthane.

L'électrolyte d'une batterie Li-ion à recycler par le procédé de l'invention peut être un électrolyte jugé non conforme après sa fabrication ou son stockage et qui n'a jamais été introduit, en réalité, dans une batterie.

Il peut aussi provenir d'une batterie qui, elle, a été ou non utilisée. Dans ce cas, l'électrolyte doit être séparé de la batterie.

Pour cela, l'électrolyte peut être aspiré ou encore récupéré par écoulement de la batterie.

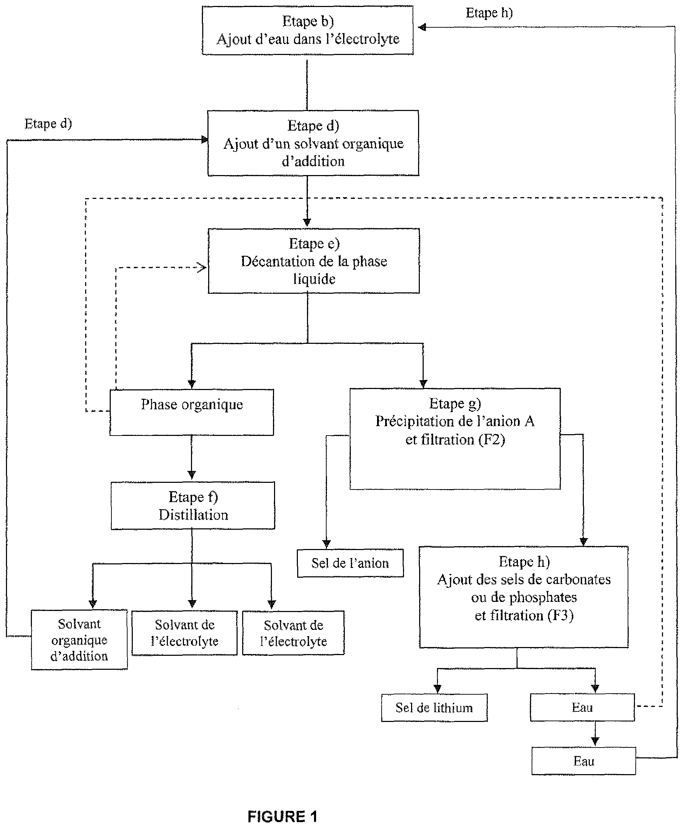

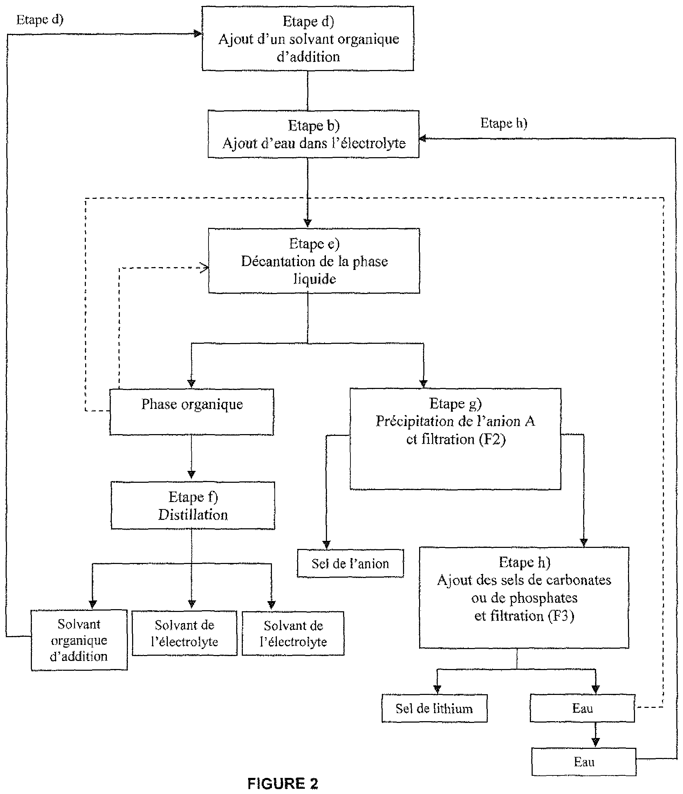

Dans ces cas, l'étape notée a) de traitement de la batterie et l'étape notée c) de filtration (F1) pour séparer la phase liquide de la phase solide ne sont pas mise en oeuvre et le procédé de recyclage de l'invention ne comprend alors que les étapes montrées en figures 1 et 2, c'est-à-dire les étapes b) et d) à h).

Ainsi, dans un premier mode de mise en oeuvre, montré en figure 1, le procédé de recyclage d'un électrolyte selon l'invention comprend l'ajout d'eau dans l'électrolyte à l'étape notée b) en figure 1, suivie d'une étape notée d) en figure 1, d'ajout d'un solvant organique d'addition dans la phase obtenue à l'étape b).

Puis une étape de décantation, notée e) en figure 1, est mise en oeuvre sur la phase obtenue à l'étape d).

La phase aqueuse et la phase organique sont alors traitées séparément, comme cela sera expliqué dans la suite par les étapes notées f) à h) en figure 1. Ces étapes sont identiques dans tous les modes de mise en oeuvre et toutes les variantes du procédé de recyclage d'un électrolyte selon l'invention.

Dans un deuxième mode de mise en oeuvre, montré en figure 2, le procédé de recyclage d'un électrolyte selon l'invention comprend, une première étape notée d) en figure 2, l'ajout d'un solvant organique d'addition dans l'électrolyte, suivie de l'étape notée b) en figure 2 d'addition d'eau dans la phase obtenue à l'étape b).

Puis une étape de décantation, notée e) en figure 2 est mise en oeuvre. Les étapes notées f) à h) en figure 2 sont ensuite mises en oeuvre sur les phases aqueuse et organique.

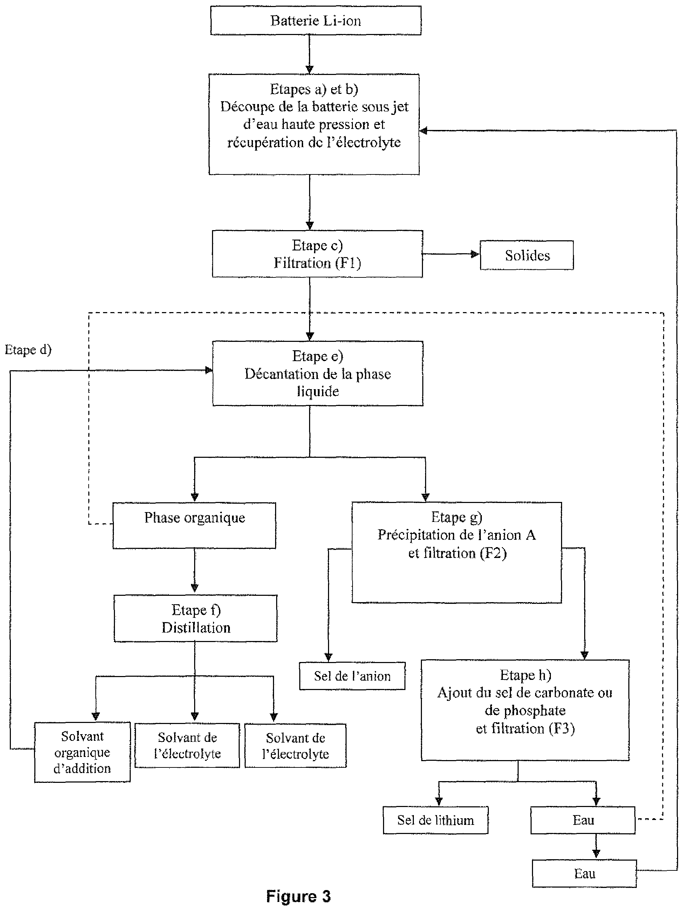

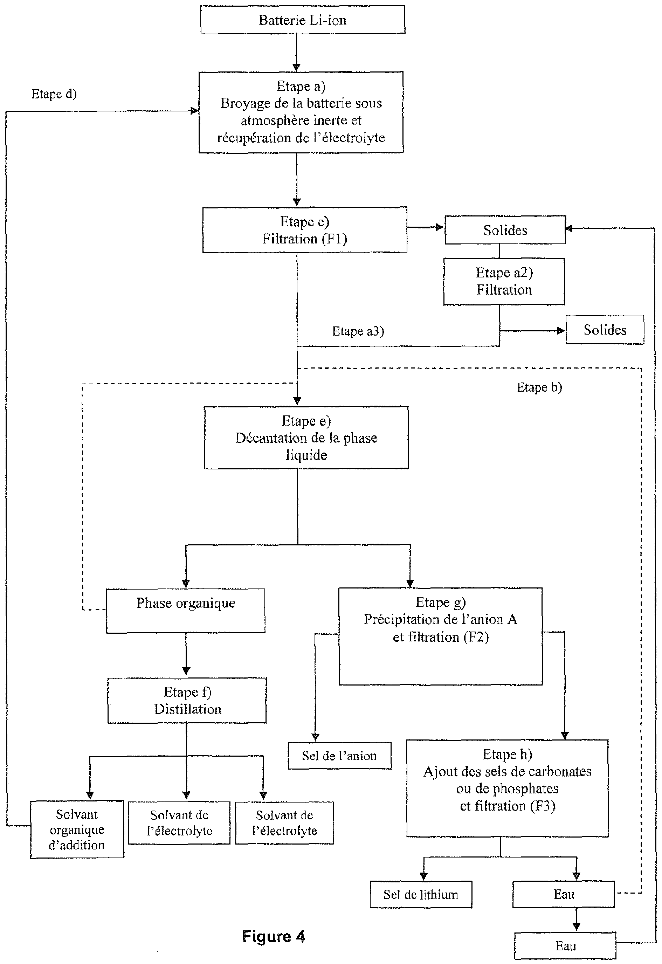

Mais, pour récupérer plus d'électrolytes, l'électrolyte peut également être extrait par traitement de la batterie, par exemple par broyage ou découpe de la batterie. Dans ce cas, le procédé, selon l'invention, de recyclage de l'électrolyte comprend les étapes a) et c), comme montré en figures 3 et 4.

Les étapes b) et d) à h), dans ce cas, sont identiques aux étapes b) et d) à h) des modes de mise en oeuvre du procédé de recyclage, de l'invention, d'un électrolyte sans traitement de la batterie.

Les étapes a) à h) en relation avec les figures 1 à 4 dans lesquelles les mêmes notations indiquent les mêmes étapes.

Ainsi, le procédé de recyclage de l'électrolyte comprend alors une étape a) de traitement de la batterie pour récupérer l'électrolyte. Cette étape a) permet d'ouvrir la batterie dans des conditions qui évitent son ignition. Cette étape a) est optionnelle.

Selon un premier mode de mise en oeuvre, comme indiqué dans l'organigramme de la figure 3, cette étape a) est réalisée en découpant la batterie sous un jet d'eau haute pression supérieure à 6000 bars. La haute pression de l'eau évite un échauffement au point de découpe.

Dans ce premier mode de mise en oeuvre, l'étape b) d'ajout d'eau est donc réalisée en même temps que l'étape a) de traitement de la batterie pour récupération de l'électrolyte.

Ensuite, à l'étape c), la phase liquide obtenue aux étapes a) et b) est filtrée (filtration F1) pour séparer la phase liquide, contenant l'électrolyte, de la phase solide, comprenant le reste de la batterie.

Puis, à l'étape d), un solvant organique d'addition est ajouté au filtrat obtenu après la filtration (F1).Ce solvant organique d'addition permet de séparer ce filtrat obtenu par décantation, à l'étape e), en deux phases, une phase aqueuse contenant le sel de lithium et une phase organique, contenant les solvants de l'électrolyte et le solvant organique d'addition.

Le solvant organique d'addition est un solvant organique aprotique et faiblement polaire, c'est-à-dire dont la polarité est proche de celle du dichlorométhane. Il doit être faiblement soluble dans l'eau, c'est-à-dire avoir une solubilité inférieure à 20 g/L⁻¹ et être soluble à 100%, c'est-à-dire que l'on ne doit pas obtenir deux phases distinctes dans les solvants organiques de l'électrolyte de la batterie de type Li-ion. Par ailleurs, le solvant organique d'addition ne doit pas former d'azéotrope avec les solvants organiques de la batterie et doit avoir un point d'ébullition relativement bas, de préférence compris entre 30°C et 150°C.

De préférence, le solvant organique d'addition est choisi parmi le dichlorométhane ; le butyl acétate, l'hexyl acétate, l'éthyle acétate, le tert-butyl acétate ; les éthers, en particulier, le 2-méthoxy-2-méthylpropane, le 2-éthoxy-2-méthylpropane, le 2-méthoxy-2-méthylbutane ; et les cétones, de préférence la butanone.

La décantation de l'étape e) est réalisée à température ambiante. Dans le cas où la phase organique contient toujours des traces du sel de lithium, l'étape de décantation peut être répétée après traitement de la phase aqueuse, et ce jusqu'à l'obtention de la pureté souhaitée.

Ensuite, à l'étape f), les solvants organiques de l'électrolyte et le solvant organique d'addition sont séparés par distillation sous une pression réduite, typiquement d'environ 100 mbar. L'absence de formation d'azéotrope permet de récupérer chaque solvant sous forme pure.

Les solvants organiques de l'électrolyte de la batterie ainsi récupérés peuvent être réutilisés dans la fabrication de l'électrolyte de nouvelles batteries. Le solvant organique d'addition, quant à lui, peut être réutilisé dans le procédé de recyclage de l'électrolyte selon l'invention, à l'étape d).

Par ailleurs, la phase aqueuse est traitée de la façon suivante : l'anion A du sel de lithium est précipité à l'étape g). On effectue alors une filtration (filtration F2) pour récupérer le précipité.

Lorsque l'anion A est l'anion hexafluorophosphate, la précipitation est réalisée par ajout de pyridine. L'ajout de pyridine permet d'obtenir un composé de formule C₅H₅NHPF₆. Ce composé présente l'avantage d'être stable à l'air et peut être converti en sel hexafluorophosphate de lithium (LiPF₆).

Ainsi, grâce au procédé de l'invention, l'anion, ici, l'hexafluorophosphate qui est susceptible de se dégrader en des espèces toxiques qui peuvent générer la dégradation de l'électrolyte de la batterie est récupéré et converti en sel de lithium.

Ensuite, à l'étape h) du procédé de recyclage de l'électrolyte de la présente invention, au moins un sel carbonate d) ou phosphate de lithium est formé par ajout, au filtrat obtenu à l'étape g), d'au moins un sel de carbonate a) ou d'au moins un sel de phosphate ou de CO₂.

Le sel de carbonate ou le sel de phosphate sont choisis parmi le phosphate ou le carbonate de calcium, de sodium ou d'ammonium.

On pourra également utiliser un bullage de CO₂ pour former un sel de carbonate de lithium.

A l'issue de l'étape h), on obtient un carbonate ou phosphate de lithium et de l'eau, qui sont séparés par une filtration (F3).

Le sel de lithium peut être utilisé de nouveau dans la fabrication d'une batterie de type Li-ion et l'eau est réutilisée dans le procédé de recyclage selon l'invention, à l'étape b).

Selon un deuxième mode de mise en oeuvre du procédé de recyclage d'un électrolyte selon l'invention, l'étape a) de traitement de la batterie pour récupération de l'électrolyte est effectuée par broyage de la batterie dans une enceinte sous atmosphère inerte. Le broyage doit être effectué dans une enceinte, sous atmosphère et à pression contrôlées, dans laquelle le gaz inerte est choisi, de préférence, parmi l'argon, l'azote, le néon, le krypton ou l'hélium.

Après la récupération de l'électrolyte à l'étape a), suit l'étape b) d'ajout d'eau et les autres étapes telles qu'indiquées sur l'organigramme de la figure 1.

Selon un troisième mode de mise en oeuvre du procédé de recyclage d'un électrolyte selon l'invention, illustré en figure 4, l'étape a) de traitement de la batterie pour récupération de l'électrolyte comprend le broyage de la batterie sous atmosphère inerte. Les conditions dans lesquelles cette étape a) est réalisée sont les même que pour l'étape a) du procédé de recyclage d'électrolyte de la présente invention selon le deuxième mode de mise en oeuvre décrit ci-dessus.

Par la suite, comme cela est montré dans la figure 4, on réalise l'étape d) d'ajout du solvant organique d'addition. L'étape d) d'ajout du solvant organique d'addition peut être réalisée pendant l'étape a) de récupération de l'électrolyte par broyage de la batterie sous atmosphère inerte ou juste après cette étape.

Ensuite, l'étape c) de filtration (F1) est mise en oeuvre après l'étape d) d'ajout du solvant organique d'addition. Ainsi la phase liquide qui contient l'électrolyte est séparée de la phase solide qui contient le reste de la batterie.

La phase liquide est alors traitée par ajout d'eau (étape b)). Suit l'étape, e) de décantation de la phase liquide pour obtenir, d'une part, la phase organique comprenant les solvants organiques de l'électrolyte et le solvant d'addition et d'autre part, la phase aqueuse, contenant les sels de lithium.

La phase organique est ensuite distillée, étape f), de manière à séparer les solvants organiques de l'électrolyte et le solvant organique d'addition.

Quant à la phase aqueuse, obtenue à l'étape e), l'anion A du sel de lithium est précipité puis filtré (filtration F2) à l'étape g).

Pour obtenir le sel de lithium, on procède à l'étape g) à une nouvelle filtration (F3) et on ajoute au moins un sel de carbonate ou au moins un sel de phosphate, ou du CO₂ (par bullage) pour former un carbonate de lithium, à l'étape h).

Les sels de carbonates peuvent être choisis parmi du carbonate de calcium, du carbonate de sodium, du carbonate d'ammonium ou un mélange de deux ou plus de ceux-ci.

Les sels de phosphates peuvent être choisis parmi du phosphate de calcium, du phosphate de sodium, du phosphate d'ammonium ou un mélange de deux ou plus de ceux-ci.

Le sel de lithium formé et l'eau sont séparés à l'étape h) par une filtration (F3). L'eau est réutilisée lors de l'étape b) avant l'étape e) de décantation.

Dans tous les modes de réalisation du procédé de recyclage d'un électrolyte selon l'invention, le solvant organique d'addition et l'eau peuvent être réutilisés dans le procédé de recyclage afin de diminuer le coût du procédé.

Par ailleurs, l'étape e) de décantation peut être répétée plusieurs fois afin de purifier davantage les solvants organiques de l'électrolyte.

Un autre objet de la présente invention est un procédé de recyclage de batteries de type Li-ion. Ce procédé peut comprendre l'un quelconque des modes de mise en oeuvre du procédé de recyclage d'électrolyte d'une batterie de type Li-ion selon la présente invention.

Comme cela est montré en la figure 4, ce procédé de recyclage d'une batterie de type Li-ion, comprend, de plus, une étape a1) de lavage des solides obtenus après extraction de l'électrolyte et, en particulier les électrodes de la batterie obtenues après la filtration (F1).

En effet, les électrodes contiennent le lithium provenant de l'électrolyte.

Les solides lavés sont ensuite séparés de la phase liquide par la filtration (F4) à l'étape a2) pour séparer la phase liquide de la phase solide.

Lors de l'étape suivante, étape a3), le filtrat (la phase liquide) obtenu à l'étape a2) est mélangé à l'étape e) de décantation de recyclage de l'électrolyte.

Les procédés objets de la présente invention peuvent être appliqués aux batteries de type Li-ion dont l'électrolyte est composé d'un mélange binaire ou ternaire des carbonates cycliques choisis parmi le carbonate d'éthylène, le carbonate de propylène et le carbonate de butylène, des carbonates linéaires ou ramifiés choisis parmi le carbonate de diméthyle, le carbonate de diéthyle, le carbonate d'éthyle méthyle et le diméthoxyéthane, dans lesquels est dissout un sel de lithium choisi parmi l'hexafluorophosphate de lithium, le trifluorométhanesulfonate de lithium, le perchlorate de lithium et le tétrafluoroborate de lithium.

Afin de mieux comprendre l'invention, on va maintenant en décrire, à titre purement illustratif et non limitatif un mode de mise en oeuvre de celle-ci.

### Exemple 1

Cet exemple décrit le procédé de recyclage de l'électrolyte d'une batterie de type Li-ion de la présente invention selon le premier mode de mise en oeuvre représenté en figure 3.

L'électrolyte de batterie de type Li-ion constitué de carbonate d'éthylène (EC), de carbonate de diméthyle (DMC) et d'hexafluorophosphate de lithium LiPF₆ (1M) est récupéré après découpage de la batterie sous un jet d'eau haute pression, typiquement de l'ordre de 6000 bars. L'électrolyte est ainsi nettoyé avec le volume d'eau utilisé lors de la découpe.

Ensuite, la phase liquide est séparée de la phase solide par une filtration (F1).

Puis, la phase liquide est traitée avec un solvant organique d'addition, le dichlorométhane (DCM) dont le volume est ajusté pour permettre l'apparition de deux phases distinctes. Ainsi, pour une solution comprenant 10mL d'eau, 10mL de solution électrolytique, on ajoute 10 mL de dichlorométhane (DCM) et on observe une démixion immédiate entre la phase organique comprenant les solvants de l'électrolyte et la phase aqueuse comprenant le sel du lithium.

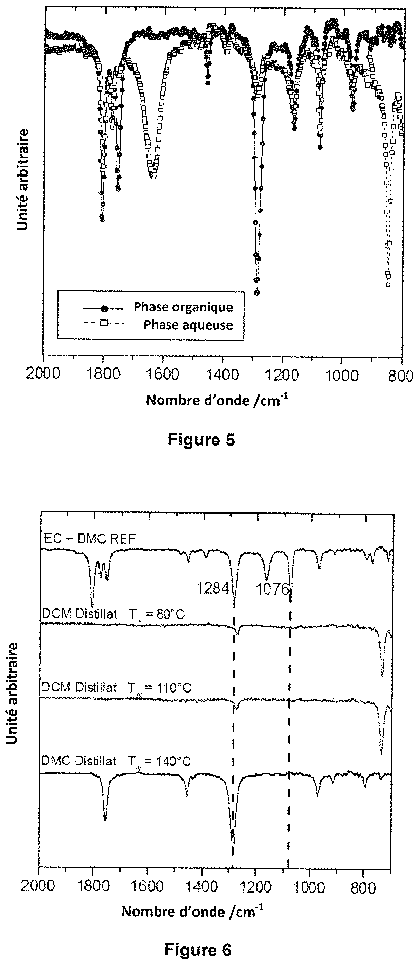

La figure 5 représente le spectre infra-rouge de la solution aqueuse et de la solution organique diluée dans une matrice d'acétonitrile. Sur cette figure, on observe, pour la phase aqueuse, la bande caractéristique de la vibration P-F de l'anion hexafluorophosphate (PF₆⁻) situé à 848cm⁻¹. Les autres bandes sont attribuables à l'eau (1638cm⁻¹) et à une présence résiduelle des solvants organiques, EC et DMC, de l'électrolyte. Pour le spectre de la phase organique on observe l'absence des bandes caractéristiques de l'anion hexafluorophosphate (PF₆⁻) et de l'eau, mais la présence des bandes caractéristiques de EC et DMC. Ceci indique que la démixion a permis de séparer les solvants organiques de l'anion hexafluorophosphate (PF₆⁻).

Parallèlement, il a été vérifié par spectromètrie d'émission atomique à plasma à couplage inductif (ICP-OES) que le lithium est également transféré dans la phase aqueuse.

Après l'étape de décantation, la phase organique et la phase aqueuse sont traitées de façon indépendante.

La phase organique a été distillée à différentes températures et sous pression atmosphérique. La figure 6 représente le spectre infra-rouge du mélange EC-DMC et des distillats obtenus à partir de la solution EC-DMC-DCM. On obtient un distillat exempt de dichlorométhane (DCM) pour une distillation à une température de 110°C. Ensuite, à une température de 140°C le DMC peut être récupéré sélectivement sans présence de EC. Ainsi, chaque produit est récupéré sélectivement et sans dégradation.

La phase aqueuse, elle, est traitée par ajout de la pyridine, en quantité équimolaire des anions PF₆⁻, puis filtrée (filtration F2) afin de former de l'hexafluorophosphate de pyridinium (C₅H₅NHPF₆), produit intermédiaire de la synthèse d'hexafluorophosphate de lithium (LiPF₆).

Ensuite, la solution aqueuse est traitée par un sel de phosphate, le Na₃(PO₄) et après filtration (F3), le sel de lithium et de l'eau sont obtenus.

### Exemple 2

Cet exemple décrit l'extraction des composés organiques issus de l'eau de broyage d'une batterie Lithium-ion après un découpage de celle-ci sous un jet d'eau haute pression.

L'électrolyte est lavé avec le volume d'eau utilisé lors de la découpe.

La partie liquide est extraite de la partie solide par une filtration.

La partie liquide est ensuite traitée avec du dichlorométhane (DCM) dont le volume est ajusté à un rapport de un dixième. Ainsi, pour une solution comprenant 100mL d'eau de broyage, on ajoute 10mL de DCM et on observe une solution biphasique (démixtion/décantation) constituée d'une phase aqueuse et d'une phase organique.

Le Tableau 1 ci-dessous indique la répartition de la concentration des carbonates dans la phase aqueuse et dans la phase organique.

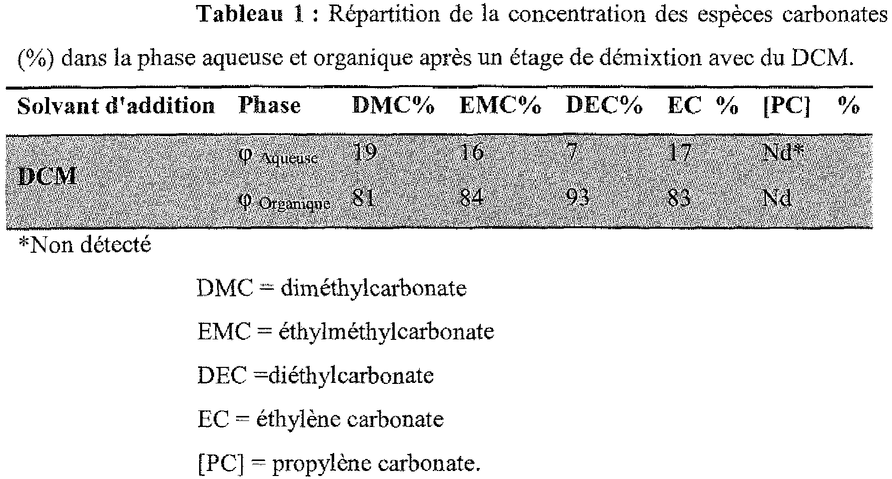

L'analyse par chromatographie (CPG) indique une concentration des carbonates dans la phase organique supérieure à 80% après une étape de démixtion.

La répétition de l'étape de démixtion sur trois étapes permet d'obtenir une concentration des carbonates en phase organique qui est supérieure à 99%.

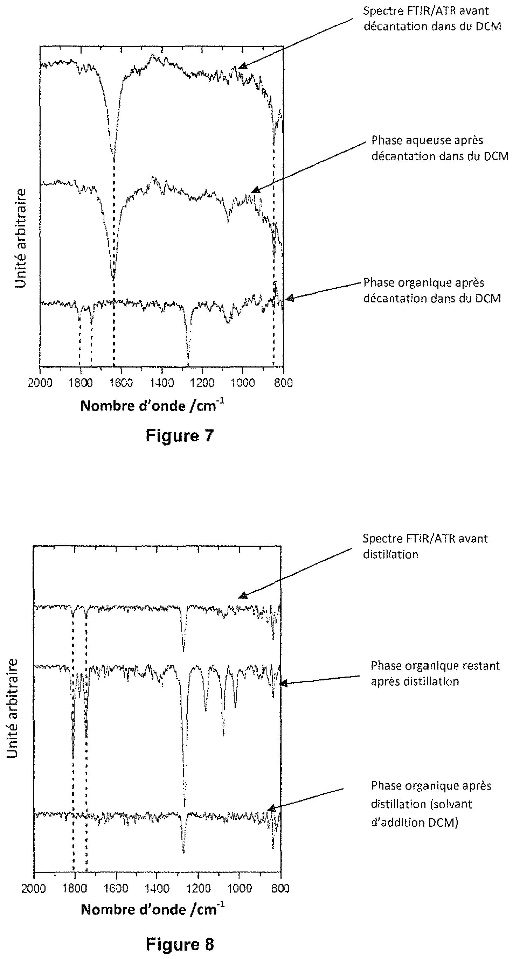

Parallèlement, il a été mesuré par ICP-OES que le lithium est exclusivement dans la phase aqueuse. Tout comme le lithium les anions PF₆⁻ sont intégralement en phase aqueuse, en témoigne la présence de la bande caractéristique P-F (située à 848cm⁻¹) dans l'eau (avant et après démixtion) et son absence dans la phase organique, comme on le voit en figure 7 qui montre les spectres FTIR/ATR (décantation de l'étape e)) de ces phases avant et après démixtion dans du DCM.

Ceci indique que la démixtion a permis de séparer les composés organiques et l'anion PF₆⁻ de la phase aqueuse. Après décantation, la phase organique et la phase aqueuse sont traitées de façon indépendante. La phase organique a été distillée à 110°C et sous pression atmosphérique. La figure 8 montre, de haut en bas, le spectre infrarouge de la phase organique avant distillation, puis après distillation i), puis restant dans le ballon. On voit que le distillat est pur en dichlorométhane, tandis que les carbonates sont concentrés dans le ballon de chauffe. Ainsi, chaque produit est récupéré sélectivement et sans dégradation.

La phase aqueuse est neutralisée par de la pyridine, en quantité équimolaire des anions PF₆⁻, afin de former de l'hexafluorophosphate de pyridinium (C₅H₅NHPF₆), produit intermédiaire de la synthèse de LiPF₆. Puis la solution aqueuse est traitée par du phosphate d'ammonium pour permettre la précipitation et la récupération du lithium.

## Revendications

1. Procédé de recyclage d'un électrolyte contenant un sel du lithium de formule LiA, où A représente un anion choisi parmi PF₆⁻, CF₃SO₃⁻, BF₄⁻, ClO₄⁻ et [(CF₃SO₂)₂]N⁻ d'une batterie de type Li-ion, **caractérisé en ce qu'**il comprend les étapes suivantes :
a) optionnellement, traitement de la batterie pour récupérer l'électrolyte qu'elle contient;
b) ajout d'eau dans l'électrolyte;
c) optionnellement, lorsque l'étape a) est mise en oeuvre, filtration (F1) pour séparer la phase liquide contenant l'électrolyte de la phase solide comprenant les résidus de la batterie;
d) ajout d'un solvant organique d'addition à la phase liquide obtenue à l'étape b) ou, lorsque l'étape a) est mise en oeuvre, après la filtration (F1) de l'étape c) ;
e) décantation de la phase liquide obtenue l'étape d) d'ajout de solvant organique d'addition, ce par quoi une phase aqueuse contenant le sel de lithium et une phase organique contenant les solvants d'électrolyte et le solvant organique d'addition sont obtenues ;
f) distillation de la phase organique obtenue à l'étape e) pour séparer les solvants de l'électrolyte et le solvant organique d'addition ;
g) précipitation de l'anion A du sel de lithium par ajout de pyridine puis filtration (F2) ;
h) ajout d'au moins un sel de carbonate et/ou d'au moins un sel de phosphate au filtrat obtenu à l'étape g) puis filtration (F3) ce par quoi un sel de lithium et de l'eau sont obtenus.

2. Procédé selon la revendication 1, **caractérisé en ce qu'**il comprend l'étape a) et **en ce que** l'étape a) et l'étape b) sont réalisées en même temps par découpe de la batterie sous jet d'eau à haute pression.

3. Procédé selon la revendication 1, **caractérisé en ce qu'**il comprend l'étape a) qui est réalisée par broyage de la batterie dans une enceinte sous atmosphère inerte.

4. Procédé de recyclage d'un électrolyte contenant un sel de lithium de formule LiA, où A représente un anion choisi parmi PF₆⁻, CF₃SO₃⁻, BF₄⁻, ClO₄⁻ et [(CF₃SO₂)₂]N⁻ d'une batterie de type Li-ion **caractérisé en ce qu'**il comprend les étapes suivantes :
- a) broyage de la batterie sous atmosphère inerte pour récupérer l'électrolyte qu'elle contient ;
- b) ajout d'un solvant organique d'addition à la phase liquide obtenue à l'étape a), cet ajout de solvant organique d'addition étant mis en oeuvre soit pendant l'étape a) elle-même, soit juste après l'étape a) ;
- c) filtration (F1) pour séparer la phase liquide contenant
l'électrolyte de la phase solide contenant les résidus de la batterie ; et
- d) ajout d'eau dans l'électrolyte obtenue après l'étape c) de filtration (F1) ;
- e) décantation de la phase liquide obtenue après l'étape b) d'ajout d'eau, ce par quoi une phase aqueuse contenant le sel de lithium et une phase organique contenant les solvants d'électrolyte et le solvant organique d'addition sont obtenues ;
- f) distillation de la phase organique obtenue à l'étape e) pour séparer les solvants d'électrolyte et le solvant organique d'addition.

5. Procédé selon l'une quelconque des revendications précédentes, **caractérisé en ce que** le solvant organique d'addition est un solvant organique aprotique et faiblement polaire ayant une solubilité inférieure à 20 gL⁻¹ dans l'eau, une solubilité de 100% dans les solvants organiques de l'électrolyte sans former d'azéotropes et un point d'ébullition compris entre 20 et 150°C.

6. Procédé selon l'une quelconque des revendications précédentes, **caractérisé en ce que** le solvant organique d'addition est choisi parmi :
- le dichlorométhane,
- les acétates, choisis parmi le butyl acétate, l'hexyl acétate, l'éthyle acétate, le tert-butyl acétate;
- les éthers choisis parmi le 2-méthoxy-2-méthylpropane, le 2-éthoxy-2-méthylpropane, le 2-méthoxy-2-méthylbutane, et
- les cétones, de préférence, la butanone.

7. Procédé selon l'une quelconque des revendications précédentes, **caractérisé en ce que** le solvant organique d'addition obtenu après la distillation de la phase organique à l'étape f) est recyclé à l'étape d).

8. Procédé selon l'une quelconque des revendications précédentes, **caractérisé en ce que** l'étape e) de décantation est répétée.

9. Procédé selon l'une quelconque des revendications précédentes, **caractérisé en ce que** l'eau obtenue à l'étape h) est récupérée pour être réutilisée à l'étape b).

10. Procédé de recyclage d'une batterie de type Li-ion, **caractérisé en ce qu'**il comprend une étape de recyclage de l'électrolyte de la batterie de type Li-ion selon l'une quelconque des revendications 1 à 9.

11. Procédé selon la revendication 10, **caractérisé en ce qu'**il comprend l'étape a) de traitement de la batterie et l'étape c) de filtration (F1), et **en ce qu'**il comprend de plus, une étape a1) de lavage à l'eau des solides obtenus après la filtration (F1), suivie d'une étape a2) de filtration (F4) pour séparer la phase liquide de la phase solide et une étape a3) de mélange de la phase liquide obtenue à l'étape a2) avant l'étape e) de décantation du procédé de recyclage de l'électrolyte.

12. Procédé selon l'une quelconque des revendications précédentes, **caractérisé en ce que** l'électrolyte est composé d'un mélange binaire ou ternaire de carbonates cycliques choisis parmi le carbonate d'éthylène, le carbonate de propylène et le carbonate de butylène, de carbonates linéaires ou ramifiés choisis parmi le carbonate de diméthyle, le carbonate de diéthyle, le carbonate d'éthyl méthyle et le diméthoxyéthane, dans lesquels est dissous un sel de lithium choisi parmi l'hexafluorophosphate de lithium, le trifluorométhanesulfonate de lithium, le perchlorate de lithium et le tétrafluoroborate de lithium.

## Patentansprüche

1. Verfahren zur Wiederverwendung eines Elektrolyts, der ein Lithiumsalz der Formel LiA enthält, wobei A ein Anion darstellt, ausgewählt aus PF₆⁻, CF₃SO₃⁻, BF₄⁻, ClO₄⁻ und [(CF₃SO₂)₂]N⁻ einer Li-Ionen-Batterie, **dadurch gekennzeichnet, dass** es die folgenden Schritte umfasst:
a) optional, Behandlung der Batterie zur Rückgewinnung des darin enthaltenen Elektrolyten;
b) Zugabe von Wasser zum Elektrolyten;
c) optional, wenn Schritt a) ausgeführt wird, Filtration (F1), um die flüssige Phase, die den Elektrolyten enthält, von der festen Phase, welche die Batteriereste umfasst, zu trennen;
d) Zugabe eines zusätzlichen organischen Lösungsmittels zu der in Schritt b) erhaltenen flüssigen Phase oder, wenn Schritt a) ausgeführt wird, nach der Filtration (F1) von Schritt c);
e) Dekantation der in Schritt d) der Zugabe von zusätzlichem organischem Lösungsmittel erhaltenen flüssigen Phase, wodurch eine wässrige Phase, die das Lithiumsalz enthält, und eine organische Phase, welche die Lösungsmittel des Elektrolyten und das zusätzliche organische Lösungsmittel enthält, erhalten werden;
f) Destillation der in Schritt e) erhaltenen organischen Phase, um die Lösungsmittel vom Elektrolyten und dem zusätzlichen organischen Lösungsmittel zu trennen;
g) Ausfällen des Anions A des Lithiumsalzes durch Zugabe von Pyridin, dann Filtration (F2);
h) Zugabe von mindestens einem Carbonatsalz und/oder mindestens einem Phosphatsalz zu dem in Schritt g) erhaltenen Filtrat (F3), dann Filtration (F3), wodurch ein Lithiumsalz und Wasser erhalten werden.

2. Verfahren nach Anspruch 1, **dadurch gekennzeichnet, dass** es Schritt a) umfasst und dadurch, dass Schritt a) und Schritt b) gleichzeitig durch Schneiden der Batterie unter Hochdruckwasserstrahl durchgeführt werden.

3. Verfahren nach Anspruch 1, **dadurch gekennzeichnet, dass** es Schritt a) umfasst, der durch Mahlen der Batterie in einem Gehäuse unter einer inerten Atmosphäre durchgeführt wird.

4. Verfahren zur Wiederverwendung eines Elektrolyten, der ein Lithiumsalz der Formel LiA enthält, wobei A ein Anion darstellt, ausgewählt aus PF₆⁻ CF₃SO₃⁻, BF₄⁻ ClO₄⁻ und [(CF₃SO₂)₂]N⁻ einer Li-Ionen-Batterie, **dadurch gekennzeichnet, dass** es die folgenden Schritte umfasst:
- a) Mahlen der Batterie unter einer inerten Atmosphäre zur Rückgewinnung des darin enthaltenen Elektrolyten;
- b) Zugabe eines zusätzlichen organischen Lösungsmittels zu der in Schritt a) erhaltenen flüssigen Phase, wobei diese Zugabe des zusätzlichen organischen Lösungsmittels entweder während Schritt a) selbst oder unmittelbar nach Schritt a) ausgeführt wird;
- c) Filtration (F1), um die flüssige Phase, die den Elektrolyten enthält, von der festen Phase, welche die Batteriereste enthält, zu trennen; und
- d) Zugabe von Wasser zum nach Schritt c) der Filtration (F1) erhaltenen Elektrolyten;
- e) Dekantation der nach Schritt b) der Zugabe von Wasser erhaltenen flüssigen Phase, wodurch eine wässrige Phase, die das Lithiumsalz enthält, und eine organische Phase, welche die Lösungsmittel des Elektrolyten und das zusätzliche organische Lösungsmittel enthält, erhalten werden;
- f) Destillation der in Schritt e) erhaltenen organischen Phase, um die Lösungsmittel des Elektrolyten und das zusätzliche organische Lösungsmittel zu trennen.

5. Verfahren nach einem der vorstehenden Ansprüche, **dadurch gekennzeichnet, dass** das zusätzliche organische Lösungsmittel ein aprotisches und schwach polares organisches Lösungsmittel mit einer Löslichkeit von weniger als 20 gL⁻¹ in Wasser, einer Löslichkeit von 100 % in den organischen Lösungsmitteln des Elektrolyten ohne Bildung von Azeotropen und einem Siedepunkt zwischen 20 und 150 °C ist.

6. Verfahren nach einem der vorstehenden Ansprüche, **dadurch gekennzeichnet, dass** das zusätzliche organische Lösungsmittel ausgewählt ist aus :
- Dichlormethan,
- Acetaten, ausgewählt aus Butylacetat, Hexylacetat, Ethylacetat, tert-Butylacetat;
- Ethern, ausgewählt aus 2-Methoxy-2-methylpropan, 2-Ethoxy-2-methylpropan, 2-Methoxy-2-methylbutan, und
- Ketonen, vorzugsweise Butanon.

7. Verfahren nach einem der vorstehenden Ansprüche, **dadurch gekennzeichnet, dass** das nach der Destillation der organischen Phase in Schritt f) erhaltene zusätzliche organische Lösungsmittel in Schritt d) wiederverwertet wird.

8. Verfahren nach einem der vorstehenden Ansprüche, **dadurch gekennzeichnet, dass** der Schritt e) der Dekantation wiederholt wird.

9. Verfahren nach einem der vorstehenden Ansprüche, **dadurch gekennzeichnet, dass** das in Schritt h) erhaltene Wasser zur Wiederverwendung in Schritt b) zurückgewonnen wird.

10. Verfahren zur Wiederverwertung einer Li-Ionen-Batterie, **dadurch gekennzeichnet, dass** es einen Schritt der Wiederverwendung des Elektrolyten der Li-Ionen-Batterie nach einem der Ansprüche 1 bis 9 umfasst.

11. Verfahren nach Anspruch 10, **dadurch gekennzeichnet, dass** es den Schritt a) der Behandlung der Batterie und den Schritt c) der Filtration (F1) umfasst, und dass es ferner einen Schritt a1) des Waschens der nach der Filtration (F1) erhaltenen Feststoffe mit Wasser umfasst, gefolgt von einem Schritt a2) der Filtration (F4) zum Trennen der flüssigen Phase von der festen Phase und einem Schritt a3) des Mischens der in Schritt a2) erhaltenen flüssigen Phase vor Schritt e) der Dekantation des Verfahrens zur Wiederverwendung des Elektrolyts.

12. Verfahren nach einem der vorstehenden Ansprüche, **dadurch gekennzeichnet, dass** der Elektrolyt aus einem binären oder ternären Gemisch von cyclischen Carbonaten, ausgewählt aus Ethylencarbonat, Propylencarbonat und Butylencarbonat, linearen oder verzweigten Carbonaten, ausgewählt aus Dimethylcarbonat, Diethylcarbonat, Ethylmethylcarbonat und Dimethoxyethan, besteht, worin ein Lithiumsalz, ausgewählt aus Lithiumhexafluorophosphat, Lithiumtrifluormethansulfonat, Lithiumperchlorat und Lithiumtetrafluoroborat, gelöst ist.

## Claims

1. Method for recycling an electrolyte containing a lithium salt of formula LiA, where A represents an anion selected from among PF₆⁻, CF₃SO₃⁻, BF₄⁻, ClO₄⁻ and [(CF₃SO₂)₂]N⁻ of a Li-ion type battery, **characterised in that** it comprises the following steps:
a) optionally, treatment of the battery to recover the electrolyte that it contains;
b) adding water into the electrolyte;
c) optionally, when step a) is implemented, filtration (F1) to separate the liquid phase containing the electrolyte of the solid phase comprising the residue of the battery;
d) adding an organic addition solvent to the liquid phase obtained in step b) or, when step a) is implemented, after the filtration (F1) of step c);
e) decanting the liquid phase obtained in step d) of adding organic addition solvent, by which an aqueous phase containing lithium salt and an organic phase containing the electrolyte solvents and the organic addition solvent are obtained;
f) distilling the organic phase obtained in step e) to separate the solvents from the electrolyte and the organic addition solvent;
g) precipitation of the anion A of the lithium salt by adding pyridine then filtration (F2);
h) adding at least one carbonate salt and/or at least one phosphate salt to the filtrate obtained in step g) then filtration (F3), by which a lithium salt and water are obtained.

2. Method according to claim 1, **characterised in that** it comprises step a) and **in that** step a) and step b) are carried out at the same time by cutting the battery by a high-pressure water jet.

3. Method according to claim 1, **characterised in that** it comprises step a) which is carried out by crushing the battery in an enclosure in an inert atmosphere.

4. Method for recycling an electrolyte containing a lithium salt of formula LiA, where A represents an anion selected from among PF₆⁻, CF₃SO₃⁻, BF₄⁻, ClO₄⁻ and [(CF₃SO₂)₂]N⁻ of a Li-ion type battery, **characterised in that** it comprises the following steps:
- a) crushing the battery in an inert atmosphere to recover the electrolyte that it contains;
- b) adding an organic addition solvent to the liquid phase obtained in step a), this addition of organic addition solvent being implemented, either during step a) itself, or just after step a);
- c) filtration (F1) to separate the liquid phase containing the electrolyte from the solid phase containing the residue of the battery;
and
- d) adding water into the electrolyte obtained after step c) of filtration (F1);
- e) decanting the liquid phase obtained after step b) of adding water, by which an aqueous phase containing lithium salt and an organic phase containing the electrolyte solvents and the organic addition solvent are obtained;
- f) distilling the organic phase obtained in step e) to separate the electrolyte solvents and the organic addition solvent.

5. Method according to any one of the preceding claims, **characterised in that** the organic addition solvent is an aprotic and slightly polar organic solvent having a solubility less than 20gL⁻¹ in water, a solubility of 100% in organic solvents of the electrolyte without forming azeotropes and a boiling point of between 20 and 150°C.

6. Method according to any one of the preceding claims, **characterised in that** the organic addition solvent is selected from among:
- dichloromethane,
- acetates, selected from butyl acetate, hexyl acetate, ethyl acetate, tert-butyl acetate;
- the ethers selected from 2-methoxy-2-methylpropane, 2-ethoxy-2-methylpropane, 2-methoxy-2-methylbutane, and
- ketones, preferably butanone.

7. Method according to any one of the preceding claims, **characterised in that** the organic addition solvent obtained after the distillation of the organic phase in step f) is recycled in step d).

8. Method according to any one of the preceding claims, **characterised in that** the decanting step e) is repeated.

9. Method according to any one of the preceding claims, **characterised in that** the water obtained in step h) is recovered to be reused in step b).

10. Method for recycling a Li-ion type battery, **characterised in that** it comprises a step of recycling the electrolyte from the Li-ion type battery according to any one of claims 1 to 9.

11. Method according to claim 10, **characterised in that** it comprises step a) of treating the battery and step c) of filtration (F1), and **in that** it comprises, in addition, a step a1) of washing with water, the solids obtained after the filtration (F1), followed by a step a2) of filtration (F4) to separate the liquid phase from the solid phase and a step a3) of mixing the liquid phase obtained in step a2) before step e) of decanting, of the method for recycling the electrolyte.

12. Method according to any one of the preceding claims, **characterised in that** the electrolyte is composed of a binary or ternary mixture of cyclic carbonates selected from ethylene carbonate, propylene carbonate and butylene carbonate, linear or ramified carbonates selected from dimethyl carbonate, diethyl carbonate, ethyl methyl carbonate and dimethoxyethane, wherein is dissolved a lithium salt selected from lithium hexafluorophosphate, lithium trifluoromethanesulfonate, lithium perchlorate and lithium tetrafluoroborate.
